# EUROPEAN PATENT SPECIFICATION

(11) **EP 0 602 495 B1**
(45) Date of publication and mention of the grant of the patent: **02.05.1997**
(21) Application number: 93119632.3
(22) Date of filing: 06.12.1993
(51) Int. Cl.: B23K 9/10, B23K 11/24

(54) **Resonant-load power supply for arc welding**
Leistungsversorgung mit resonanter Last für das Lichtbogenschweissen
Source de puissance avec charge résonante pour le soudage à l'arc

(30) Priority: 18.12.1992 IT PD920223
(43) Date of publication of application: 22.06.1994
(73) Proprietor: SELCO S.r.L., I-35010 Tombolo (Padova) (IT)
(72) Inventor: Corticelli, Giuliano, I-35133 Padova (IT)
(74) Representative: Modiano, Guido, Dr.-Ing.

(56) References cited:
- EP-A- 0 345 981
- FR-A- 2 547 128
- GB-A- 2 019 135

## Description

The present invention relates to a resonant-load power supply for arc welding.

The power supply according to the present invention falls within the technology of electric-arc welding, which as is known is a metal welding process in which the energy required to melt the materials involved originates from an arc powered by electric current.

This arc is powered by appropriate generators capable of delivering even intense currents (50-500A) with voltages on the order of tens of volts (20-45V).

Accordingly, the power involved can be quite considerable (up to 20 kW), consequently determining the size of the power supply.

Very bulky and heavy power supplies which have scarcely satisfactory control dynamics are still in use.

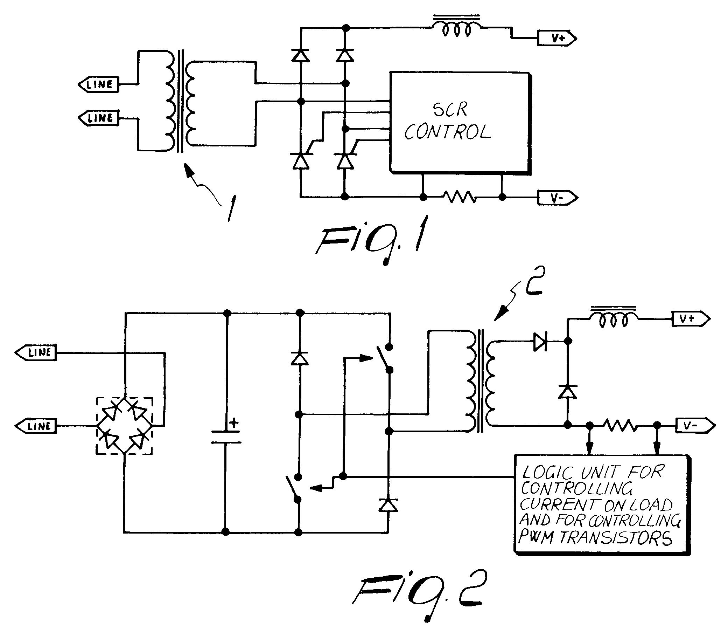

These devices had an electrical layout of the kind shown in figure 1, substantially constituted by a semi-controlled mains rectifier that required a bulky and heavy line transformer to provide the intended power at a voltage of 25-45 V.

The response speed of the adjustment circuit had the same order of magnitude as the period of the line and was thus often inadequate to the quick variations of the electrical characteristic typical of an electric arc during welding.

A later, more modern technology has superseded this type of power supply by means of switching methods and of technologies linked to electronic components that have allowed to develop and perfect switching power supplies supplied directly by the line.

In these circuits, the line voltage is immediately rectified and smoothed and supplies a solid-state inverter having a rather high switching frequency (20-30 kHz).

The transformer that adapts the voltage and the current in order to power the electric arc is thus much smaller, to the benefit of total dimensions and weights.

Furthermore, since the switching period is much shorter (30-50 microseconds), adjustment can be much faster.

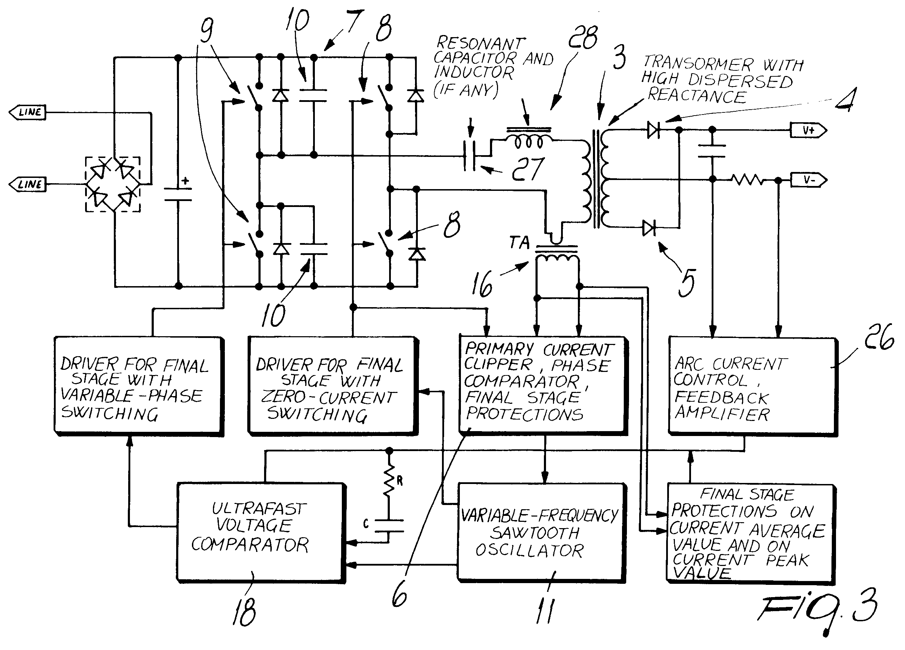

The configuration of the power stage commonly used in these devices is an asymmetrical half-bridge also known as a "double-transistor forward" half-bridge (figure 2).

This power supply has proved to be interesting, since first of all it is very rugged and allows to handle even very high power levels.

It also allows to include turn-off protection networks (snubbers), which improve overall efficiency and reduce turn-off dissipation of the transistors; furthermore, these networks were indispensable with the semiconductors used in the past.

Another advantage was that the output transformer demagnetized itself completely at the end of each operating cycle.

This meant that subsequent cycles had no "memory" of the preceding cycles, and in principle the subsequent cycles could be very different in terms of duty cycle if this was required by the arc.

This allowed cycle-by-cycle, and thus intrinsically very fast, adjustment techniques such as the "current-mode" technique, which were otherwise very difficult to achieve.

Even this circuit, however, had considerable drawbacks.

It has in fact a configuration which inefficiently uses the magnetic parts, since asymmetrical induction does not allow to utilize the maximum flux change.

The transformer is underutilized with respect to its maximum capacity, which is observed with symmetrical induction.

The inductance dispersed between the primary and the secondary windings is harmful, since it produces dangerous overvoltages on rectifier diodes, which require very bulky dissipative damping networks.

In particular, in order to attempt to obviate this drawback, it is customary to space the two windings, to the benefit of ventilation, but this drastically worsens their coupling and enhances dispersed inductance.

Furthermore, losses in the switches are not small, since the switchings are forced.

It is not possible to easily attain high frequencies unless worsening the overall efficiency, with the consequent need to oversize the final stage and the dissipators.

The aim of the present invention is to solve the problems linked to the types of power supplies for arc welding machines currently in use.

A consequent primary object is to provide a power supply which achieves maximum utilization of the power transformer, with a considerable reduction in its bulk.

A further object is to provide a power supply in which need for dissipation in the transistors-switches is reduced, with a reduction in the dimensions of the heat dissipators.

A further object is to provide an adjustment system having a better performance than the conventional systems.

With these and other objects in view, there is provided, according to the present invention, a resonant-load power supply for arc welding, characterized in that it comprises:
a) a dual half-wave center-tap rectifier stage, constituted by two diodes branched from the center-tap secondary winding of a transformer with high dispersed reactance;
b) a circuit for supplying power to the primary winding of said resonant transformer by virtue of a capacitor, possibly combined with an inductor if the one constituted by the primary winding of the transformer itself is not sufficient;
c) two pairs of electronic switches, in the power supply circuit, a first pair switching in zero-current conditions and a second pair switching in variable-phase conditions;
d) driving and control means constituted by a phase comparator that drives a variable-frequency sawtooth oscillator controlling said first pair of switches and, by means of an ultrafast voltage comparator, said second pair of switches as well;
e) means for controlling the current of the arc and means for protecting the final stage.

Further characteristics and advantages of the present invention will become apparent from the following detailed description of layouts according to the state of the art and of a preferred embodiment thereof, given by way of non-limitative example and illustrated in the accompanying drawings, wherein:
figures 1 and 2 are two layouts of power supplies executed according to a known and widespread method;
figure 3 is a general block diagram of the power supply according to the present invention;
figure 4 is a more detailed view of part of the layout of figure 3, constituted by an ultrafast sawtooth signal generator;
figure 5 is a view of another part of the layout of figure 3, constituted by a phase comparator;
figure 6 is a view of part of the circuit of figure 3, constituted by a primary-current clipper;
figure 7 is a more detailed view of part of the circuit of figure 3, constituted by a discrete ultrafast voltage comparator;
figure 7a is a view of an ultrafast integrated comparator that can be combined with the circuit of figure 7;
figure 8 is a more detailed view of another part of the circuit of figure 3;
figure 9 charts a set of typical performance curves of the power supply.

With reference to the above figures, a known power supply of an electric arc welding machine is built according to the layout of figure 1.

In this case it is a semi-controlled mains rectifier that requires a bulky and heavy line transformer 1 to provide the 24-45 V required together with the welding current.

The response speed of the adjustment circuit has, in these machines, the same order of magnitude as the period of the line and is thus often inadequate to the rapid variations in electrical characteristics that an electric arc undergoes during welding.

The layout of figure 1 was quickly superseded as soon as switching technology and electronic component technology allowed to develop and perfect switching power supplies powered directly from the line.

In such circuits, like the one shown in figure 2, the line voltage is immediately rectified and smoothed, and supplies a solid-state inverter having a rather high switching frequency (20-30 kHz).

The transformer, designated by the reference numeral 2, that adapts the voltage and the current in order to power the arc is therefore much smaller, to the benefit of overall dimensions and weights.

Furthermore, since the switching time is much shorter (30-50 microseconds), adjustment can be considerably faster.

The configuration of the power stage is an asymmetrical half-bridge, commonly termed "double-transistor forward" configuration, shown in figure 2.

This configuration uses the magnetic parts inadequately, since induction is asymmetrical and thus it is not possible to utilize the maximum flux variation.

The transformer is underutilized with respect to its theoretical maximum, which is associated with symmetrical induction.

The inductance dispersed between the primary and the secondary windings is harmful, since it produces dangerous overvoltages on the rectifier diodes, which require dissipative and bulky damping networks.

In particular, in welding it is common to space the two windings, in order to improve the ventilation.

This worsens their coupling and increases dispersed inductance.

The losses in the switches are not small, since switching is forced.

It is not possible to easily attain high frequencies, unless worsening the overall efficiency and oversizing the final stage and the dissipators.

Figure 3 illustrates the power supply according to the invention by means of block diagrams.

In this configuration, the final stage is constituted by a transformer 3 and by a pair of diodes 4 and 5 that form a so-called "full bridge", whereas the adjustment system, as will become apparent hereinafter, is of the type allowing a so-called "phase variation" between the two half-bridges that form the final stage.

This is a dual half-wave center-tap rectifier stage constituted by two diodes branched from the center-tap secondary winding of a transformer with high dispersed reactance.

The circuit is furthermore provided with a fast phase comparator 6 which allows to adjust the operating frequency of the inverter 7 as the load conditions vary.

This allows to optimize the switching time of one of the two pairs of electronic switches, i.e. the pair designated by the reference numeral 8, reducing dissipation in switching.

For the other pair of switches, designated by the reference numeral 9, turn-off losses are reduced by pure capacitive snubbers, designated by the reference numeral 10, which can be used due to the resonant nature of the load.

The various components of the layout illustrated in figure 3 reoccur in the subsequent figures.

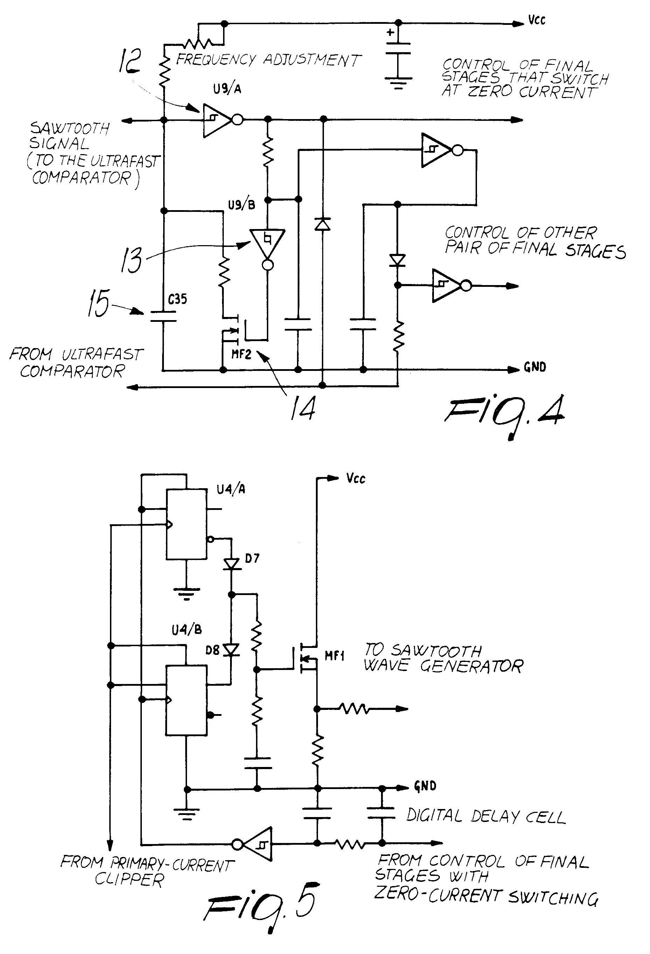

Figure 4 illustrates the ultrafast sawtooth signal generator, designated by the reference numeral 11 in figure 3.

The essential components of this generator are the two logical gates 12 and 13, the MOSFET 14 and the timing capacitor 15.

The signal is shown in figure 9, where it is designated by the reference numeral 9d.

The zeroing slopes of the sawtooth, designated by the reference numeral 9d1 in figure 9, also cause the switching of the pair of switches designated by the reference numeral 8 in figure 3, which thus switch at zero current.

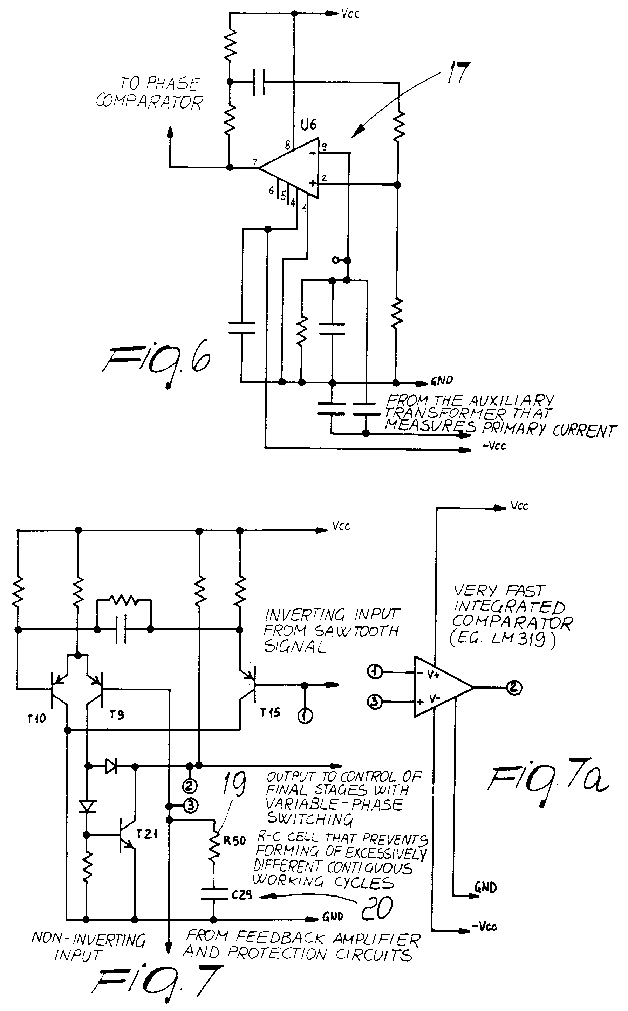

The comparator illustrated in figure 5 acts on this generator 11 and corrects the gradient of the ramp of the sawtooth, designated by the reference numeral 9d2 in figure 9, which thus varies the operating frequency.

The phase comparator compares the rising edges of the control signal of a pair of MOSFETs and of the square wave obtained by clipping the primary current of the transformer 3, measured with a current transformer 16.

In this manner, the phase comparator tends to make the switching of one of the two final half-bridges coincide with the zero value of the primary current, which due to the resonant nature of the load is sinusoidal, as shown in the chart 9c of figure 9, or has a very similar waveform.

Accordingly, said current naturally becomes zero at every half-cycle.

In this manner, said pair of output MOSFETs switches at zero or very low current and thus with reduced losses.

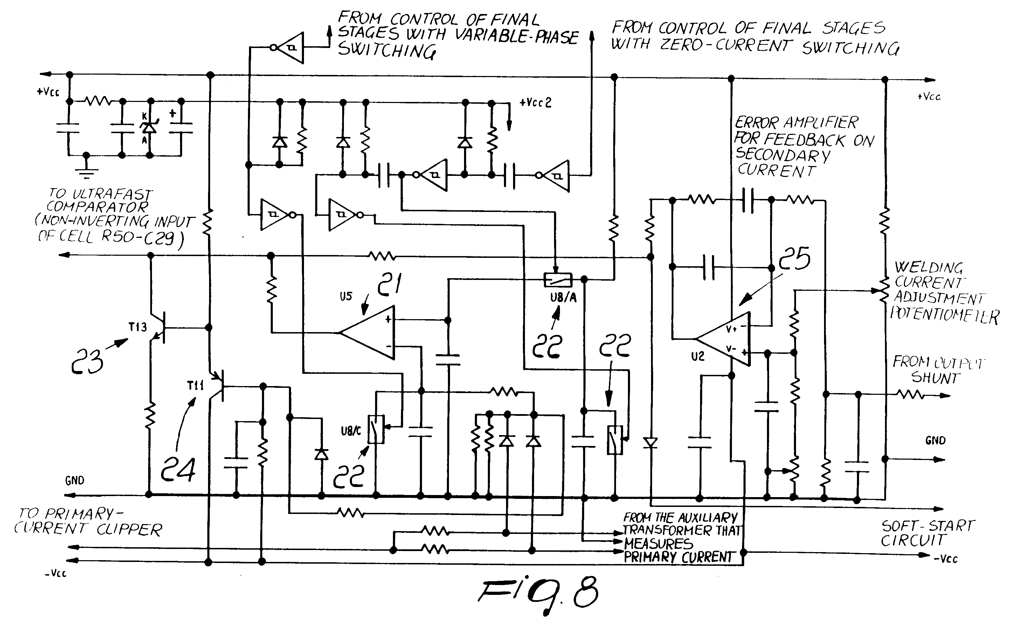

Figure 6 illustrates the primary current clipping circuit formed with an integrated circuit, designated by the reference numeral 17, and with auxiliary circuits shown in the same figure.

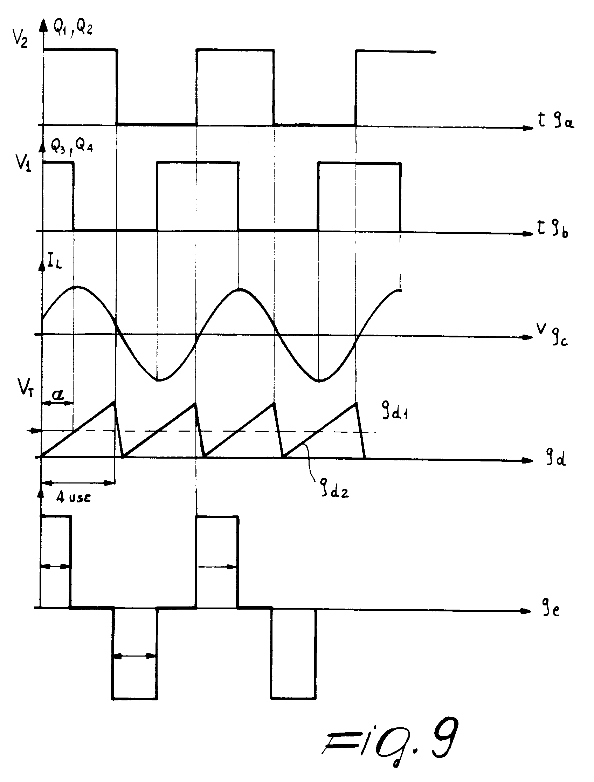

Figures 7 and 7a illustrate the ultrafast voltage comparator, designated by the reference numeral 18 in the layout of figure 3.

This comparator compares the sawtooth generated by the block shown in figure 4 with the voltage present on the R-C cell formed by the resistor 19 and by the capacitor 20.

The instant of comparison causes switching in the second power half-bridge and is thus variable with respect to the switching of the other arm, which always coincides with the zero fall of the sawtooth.

In this manner, by changing the voltage across the R-C cell, the switching time of the second half-bridge changes with respect to the first one, i.e. the phase between the two half-bridges changes.

The average value per period of the voltage applied to the primary winding of the transformer 3 changes with it, and thus the power on the load also changes in the required manner.

Figure 7a shows that it is possible to achieve the same result with an ultrafast integrated comparator by inserting the terminals 1, 2 and 3 circled in figure 7a in the corresponding points 1, 2 and 3 circled in figure 7.

The above mentioned R-C cell is essential for the operation of the power supply.

The comparator 21, driven by the switches 22, the transistors 23 and 24, and the signal arriving from the error amplifier 25 which is part of the block designated by the reference numeral 26 in figure 3, act on said cell, as can be seen in figure 8.

The first two of the above mentioned circuits are protections, and more specifically the first one acts on the average value per cycle of the primary current and is a synchronous integrator having a maximum threshold.

The second protection, connectable to the transistors 23 and 24, controls the maximum value of the current.

When these protections, which can operate even for a single half-cycle, intervene, they reduce the voltage across the R-C cell and thus across the comparator, increasing the phase shift between the two MOSFET half-bridges and consequently reducing the power.

This cell is sized so that it is impossible to have two excessively different successive half-cycles, since it prevents excessively rapid variations of the comparison voltage of the ultrafast discrete comparator.

This circuitry ensures a very fast adjustment response, preventing saturation of the transformer 3.

This transformer 3, which is the output transformer, is constructed so as to enhance its own dispersed reactance.

This reactance of the transformer, which occurs electrically in series to the capacitor 27, resonates with it, possibly in combination with a further reactance, designated by the reference numeral 28 in figure 3.

The primary and the secondary windings of the transformer 3 are surrounded by a large air space between them, which certainly improves dissipation of the heat produced during operation.

Said output transformer with wide air spaces, in order to enhance dispersed reactance, is furthermore formed with a gap in the magnetic circuit.

Said gap, which has an appropriate value, does not only have the conventional purpose of preventing or attenuating possible saturation phenomena, as required in some conventional applications.

Said gap is in fact designed to increase the magnetizing current to values that are approximately 5-15% of the maximum primary current at the maximum load.

This effect is not harmful or dissipative, as might be assumed by conventional analysis, but significantly reduces losses of the inverter in no-load or low-load operation.

In these conditions, in fact, the pair of switches designated by the reference numeral 9, due to the low current produced by the load, would be forced to dissipate the energy stored by the snubber capacitors arranged in parallel to them.

In non-zero load conditions said switches are in fact already switched on at zero voltage, since the current in the load, which is sinusoidal, discharges the capacitors toward the switch which is about to start conducting.

In zero-load conditions this would not occur, and the final stages, by switching on, would discharge the energy of said capacitors onto themselves.

However, if the primary magnetizing current is increased above normal with said gap, the opening of each switch 9 occurs with such a current as to discharge the capacitors toward the other device, either fully or partially, thus reducing dissipation.

Said electronic switches, designated by the reference numerals 8 and 9, can be constituted by any type of currently known power electronic device, i.e. bipolar transistors, MOSFETs, IGBTs, GTOs, MCTs and any other more advanced device provided by technology, always suitable to control high currents and voltages with an "on-off" mode of operation.

If the operating frequency is excessively high, it is possible to insert ferrite cores having appropriate dimensions and magnetic characteristics in the air spaces between the primary and the secondary windings of this transformer 3, said cores having the purpose of increasing the dispersed flux, i.e. the flux which is not concatenated to both windings.

As an alternative, it is possible to eliminate these ferrites, to the benefit of heat dissipation, but in this case it is necessary to add in series to the primary winding a further inductor allowing resonance.

Considerable advantages are obtained with a configuration of the type described; they can be summarized as follows:
1) The dimensions of the magnetic parts are particularly limited, due to the high operating frequency and to the fact that induction is symmetrical.
2) Dissipation of the transistors-switches is very low due to the resonance of the system which substantially allows zero switching losses. A consequence of this is a drastic reduction in the metal radiators dissipating heat.
3) The dispersed inductance of the transformer is no longer harmful but is indeed desirable, since it becomes part of the resonant-series circuit, fully representing the resonance inductor or constituting a significant part thereof.
4) The snubbers on the rectifier diodes are also very small.
5) Output filtering is very simple, due to the high switching frequency, which is doubled in output by symmetrical rectification (and is thus approximately equal to 300 kHz). The very cables connecting the machine and the point where the arc forms, generally having an overall lenght not shorter than two meters, contribute to smooth the current with their own, albeit small, inductance.
6) Due to the high frequency, the adjustment circuit can be very fast; the adjustment obtained, by virtue of an appropriate calculation of said R-C cell, has a better performance than that obtainable with conventional methods. It is furthermore possible to use the protection circuit on the average primary current, constituted by 21 and 22 of figure 8, or an adequately modified version thereof, to form a so-called "current-mode" control system; the performance obtainable is exceptional in terms of speed of the adjustment, which occurs cycle by cycle, merely by slightly penalizing circuital complexity.

From what has been described and illustrated it can be seen that the intended aim and objects have all been achieved; the set of circuits shown is only an example, since said circuits can be obtained with different components while maintaining the same operating logic.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Resonant-load power supply for arc welding, characterized in that it comprises:
a) a dual half-wave center-tap rectifier stage, constituted by two diodes (4,5) branched from the center-tap secondary winding of a transformer (3) with high dispersed reactance;
b) a circuit (7) for supplying power to the primary winding of said resonant transformer (3) by virtue of a capacitor, possibly combined with an inductor (28) if the one constituted by the primary winding of the transformer itself is not sufficient;
c) two pairs of electronic switches, in the power supply circuit, a first pair (8) switching in zero-current conditions and a second pair (9) switching in variable-phase conditions;
d) driving and control means constituted by a phase comparator (6) that drives a variable-frequency sawtooth oscillator (11) controlling said first pair (8) of switches and, by means of an ultrafast voltage comparator (18), said second pair (9) of switches as well;
e) means (26) for controlling the current of the arc and means for protecting the final stage.

2. Resonant-load power supply according to claim 1, characterized in that adjustment is obtained by means of a triangular-wave oscillator (11) the falling edges of which cause the switching of one of the two half-bridges.

3. Power supply according to claims 1 and 2, characterized in that the triangular wave obtained with the oscillator according to claim 2 is compared with a variable level by means of an ultrafast voltage comparator (18) of the discrete-transistors or integrated-circuit type, so as to control the second switching time of the second half-bridge.

4. Resonant-load power supply according to claim 1, characterized in that it comprises an ultrafast phase comparator (6) which varies the operating frequency of the power supply so as to make the switching of one of the two arms of the power bridge coincide with the zero values of the primary current, thus containing switching losses.

5. Resonant-load power supply according to claim 1, characterized in that it has a protection circuit (21,22) on the average primary current, calculated cycle by cycle by means of a synchronous integrator.

6. Resonant-load power supply according to claim 1, characterized in that it comprises an R-C cell (19,20) having the purpose, in the case of individual half-cycle intervention of one of the protections, of containing changes in the duration of the successive cycles to avoid saturation of the transformer (3).

7. Resonant-load power supply according to claim 1, characterized in that said transformer (3) is formed with widely spaced windings so as to enhance dispersed reactance between the primary and the secondary windings and with a gap in the magnetic circuit, said reactance being suitable to fully or partially constitute the resonance inductance of the output circuit.

8. Resonant-load power supply according to claims 1 and 7, characterized in that the air spaces of said transformer (3), formed with wide air spaces between the primary and the secondary windings, are possibly occupied by ferrite cylinders which have the purpose of increasing dispersed reactances and of lowering the switching frequency.

## Patentansprüche

1. Resonanzbelastete Leistungsversorgung für Lichtbogenschweißen, dadurch gekennzeichnet, daß sie umfaßt:
a) eine duale Halbwellen-Gleichrichter Gleichrichterstufe mit Mittelanzapfung, gebildet von zwei Dioden (4, 5), die von der mittenangezapften Sekundärwicklung eines Transformators (3) mit hochdisperser Reaktanz abzweigen;
b) eine Schaltung (7) zur Versorgung der Primärwicklung des resonanten Transformators (3) mit Leistung mit Hilfe eines Kondensators, ggf. kombiniert mit einer Induktivität (28), wenn die von der Primärwicklung des Transformators gebildete selbst nicht ausreichend ist;
c) zwei Paare elektronischer Schalter, in der Leistungsversorgungsschaltung, wobei ein erstes Paar (8) im Nullstromzustand und ein zweites Paar (9) im Zustand variabler Phase schaltet;
d) Treiber- und Steuermittel, gebildet von einem Phasenkomparator (6), der einen Sägezahnoszillator (11) mit variabler Frequenz treibt, der das erste Paar (8) von Schaltern steuert und mit Hilfe eines ultraschnellen Spannungskomparators (18) auch das zweite Paar (9) von Schaltern;
e) Mittel (26) zum Steuern des Stromes des Lichtbogens sowie Mittel zum Schützen der Endstufe.

2. Resonanzbelastete Leistungsversorgung nach Anspruch 1, dadurch gekennzeichnet, daß eine Anpassung mit Hilfe eines Dreieckwellen-Oszillators (11) erhalten wird, dessen abfallende Kanten das Schalten einer der beiden Halbbrücken verursachen.

3. Leistungsversorgung nach Anspruch 1 und 2, dadurch gekennzeichnet, daß die mit dem Oszillator nach Anspruch 2 erhaltene Dreieckwelle mit einem variablen Wert mit Hilfe eines ultraschnellen Spannungskomparators (18) vom Typ mit einzelnen Transistoren oder vom Typ der integrierten Schaltung verglichen wird, zum Steuern der zweiten Schaltzeit der zweiten Halbbrücke.

4. Resonanzbelastete Leistungsversorgung nach Anspruch 1, dadurch gekennzeichnet, daß sie einen ultraschnellen Phasenkomparator (6) enthält, der die Betriebsfrequenz der Leistungsversorgung variiert, um es zu erreichen, daß das Schalten eines der beiden Arme der Leistungsbrücke mit dem Nullwert des Primärstromes zusammenfällt, um dadurch Schaltverluste einzugrenzen.

5. Resonanzbelastete Leistungsversorgung nach Anspruch 1, dadurch gekennzeichnet, daß sie eine Schutzschaltung (21, 22) für den durchschnittlichen Primärstrom aufweist, berechnet Zyklus um Zyklus mit Hilfe eines synchronen Integrierers.

6. Resonanzbelastete Leistungsversorgung nach Anspruch 1, dadurch gekennzeichnet, daß sie ein R-C-Glied (19, 20) aufweist mit dem Zweck, im Falle einzelner Halbzyklusinterventionen einer der Schutzschaltungen Änderungen in der Dauer aufeinanderfolgende Zyklen zu enthalten, zur Vermeidung einer Sättigung dem Transformators (3).

7. Resonanzbelastete Leistungsversorgung nach Anspruch 1, dadurch gekennzeichnet, daß der Transformator (3) mit Wicklungen mit großem Abstand gebildet ist, um dadurch eine disperse Reaktanz zwischen der Primärwicklung und der Sekundärwicklung zu vergrößern, und mit einer Lücke in dem magnetischen Kreis, wobei die Reaktanz geeignet ist, die Resonanzinduktion der Ausgangsschaltung vollständig oder teilweise zu bilden.

8. Resonanzbelastete Leistungsversorgung nach Anspruch 1 und 7, dadurch gekennzeichnet, daß die Luftspalte des Transformators (3), gebildet mit breiten Luftspalten zwischen der Primärwicklung und der Sekundärwicklung, ggf. von Ferritzylindern belegt sind, die den Zweck haben, disperse Reaktanzen zu vergrößern und die Schaltfrequenzen zu verringern.

## Revendications

1. Alimentation à charge résonnante pour soudage à l'arc, caractérisée en ce qu'elle comprend :
a) un étage de redressement par point milieu à deux demi-ondes, constitué par deux diodes (4, 5) branchées sur l'enroulement secondaire à point milieu d'un transformateur (3) à réactance fortement dispersée ;
b) un circuit (7) destiné à alimenter en courant l'enroulement primaire du transformateur (3) à résonance à l'aide d'un condensateur, éventuellement combiné à une inductance (28), si celle qui est constituée par l'enroulement primaire du transformateur n'est pas suffisante en soi ;
c) deux paires de commutateurs électroniques, présents dans le circuit d'alimentation, une première paire (8) commutant au zéro du courant et une seconde paire (9) commutant dans des conditions de phase variable ;
d) des moyens de pilotage et de commande constitués par un comparateur de phase (6) qui pilote un oscillateur (11) à courant en dents de scie à fréquence variable, commandant la première paire (8) de commutateurs et, au moyen d'un comparateur de tension (18) ultrarapide, également la deuxième paire (9) de commutateurs ;
e) des moyens (26) permettant de commander le courant de l'arc et des moyens de protection du dernier étage.

2. Alimentation à charge résonnante selon la revendication 1, caractérisée en ce que le réglage est obtenu au moyen d'un oscillateur (11) à signal triangulaire, dont les flancs arrière entraînent la commutation de l'un des deux demi-ponts.

3. Alimentation selon les revendications 1 et 2, caractérisé en ce que l'onde triangulaire obtenue avec l'oscillateur selon la revendication 2 est comparée avec un niveau variable au moyen d'un comparateur de tension (18) ultrarapide du type à transistors discrets ou à circuit intégré, afin de commander l'instant de deuxième commutation du deuxième demi-pont.

4. Alimentation à charge résonnante selon la revendication 1, caractérisée en ce qu'elle comprend un comparateur de phase (6) ultrarapide qui fait varier la fréquence de fonctionnement de l'alimentation afin de faire coïncider la commutation de l'une des deux branches du pont de puissance avec les valeurs zéro du courant primaire, pour absorber ainsi des pertes de commutation.

5. Alimentation à charge résonnante selon la revendication 1, caractérisée en ce qu'elle possède un circuit de protection (21, 22) sur le courant primaire moyen, calculé cycle par cycle au moyen d'un intégrateur synchrone.

6. Alimentation à charge résonnante selon la revendication 1, caractérisée en ce qu'elle comprend un montage R-C (19, 20) ayant pour but, en cas d'intervention individuelle à mi-cycle de l'une des protections, d'absorber des changements dans la durée des cycles successifs afin d'éviter la saturation du transformateur (3).

7. Alimentation à charge résonnante selon la revendication 1, caractérisée en ce que le transformateur (3) présente des enroulements largement espaces afin d'améliorer la réactance dispersée entre les enroulements primaire et secondaire et présente un entrefer dans le circuit magnétique, la réactance étant adaptée à constituer, totalement ou partiellement, l'inductance à résonnance du circuit de sortie.

8. Alimentation à charge résonnante selon les revendications 1 et 7, caractérisée en ce que les espaces d'air du transformateur (3), formé avec de larges espaces d'air entre les enroulements primaire et secondaire, sont éventuellement occupés par des cylindres en ferrite qui ont pour but d'augmenter les réactances dispersées et de diminuer la fréquence de commutation.
